## Europäisches Patentamt
## European Patent Office
## Office européen des brevets

(19)

(11) Veröffentlichungsnummer: **0 111 715**
**B1**

(12) **EUROPÄISCHE PATENTSCHRIFT**

(45) Veröffentlichungstag der Patentschrift:
29.04.87

(51) Int. Cl.⁴: **G 01 P 9/00**

(21) Anmeldenummer: **83111055.6**

(22) Anmeldetag: **05.11.83**

(54) Verfahren zur Bestimmung der Drehgeschwindigkeit.

(30) Priorität: 20.11.82 DE 3242914
02.08.83 DE 3327800

(43) Veröffentlichungstag der Anmeldung:
27.06.84 Patentblatt 84/26

(45) Bekanntmachung des Hinweises auf die Patenterteilung:
29.04.87 Patentblatt 87/18

(84) Benannte Vertragsstaaten:
DE FR GB

(56) Entgegenhaltungen:
CH-A-512 744
DE-A-1 962 136
US-A-4 017 187

(73) Patentinhaber: TELDIX GmbH, Grenzhöfer Weg 36
Postfach 105608, D-6900 Heidelberg 1 (DE)

(72) Erfinder: Müller, Paul, Dr. rer.nat., Am
Büchsenackerhang 35, D-6900 Heidelberg 1 (DE)

(74) Vertreter: Kammer, Arno, Dipl.- Ing., TELDIX
GmbH Postfach 10 56 08 Grenzhöfer Weg 36,
D-6900 Heidelberg 1 (DE)

LIBER, STOCKHOLM 1987

**Beschreibung**

Die Erfindung betrifft ein Verfahren zur Bestimmung der Drehgeschwindigkeiten $\Omega_I$, $\Omega_{II}$ und/oder $\Omega_{III}$ um wenigstens zwei Achsen I, II und/oder III eines vorzugsweise rechtwinkligen Koordinatensystems, bei dem ein sich einer Drehung um eine beliebige Achse nicht widersetzender Kreisel (z.B. ein Laserkreisel) mit einer bekannten Drehgeschwindigkeit $\omega_0$ mit den bekannten Komponenten $\omega_{0I}$, $\omega_{0II}$ und $\omega_{0III}$ um eine Hilfsdrehachse gedreht wird und wobei die Eingangsachse des Kreisels gegen die Hilfsdrehachse um einen Winkel 90 - $\delta$ geneigt ist. Diese Achsen I, II, III können z.B. die Achsen eines Fahrzeugs sein.

Aus der US-A- 4 017 187 ist ein Verfahren zur Bestimmung der Drehgeschwindigkeit unter Verwendung von Laserkreiseln bekannt. Dieses benutzt drei pyramidal angeordnete Laserkreisel, die gleichzeitig die Drehbewegung um drei Raumachsen messen. Zur Unterdrückung des Lock-in-Effekts sind die Kreisel in einem Drehsystem angeordnet. Nachteilig bei diesem Verfahren ist die Verwendung mehrerer Kreisel, die einen hohen Herstellungsaufwand erfordern und das durch die Erzeugung dreier Ausgangssignale bei denen jedes mit einem eigenen Meßfehler behaftet ist, ungenaue Meßergebnis.

Es ist außerdem aus der CH-A- 512 744 ein sogenannter Nuklearkreisel bekannt, bei dem als Rotor der Summen-Spin von Elementarteilchen dient. Zur Bewegungserkennung gelangen drei Meßspulen zum Einsatz. Auch dieses Meßverfahren ist sehr aufwendig und erzeugt außerdem unterschiedliche Meß-fehler die eine genaue Bestimmung der Winkelgeschwindigkeit um beliebige Meßachsen nicht zulassen.

Der Erfindung liegt die Aufgabe zugrunde, den Aufwand für die Messung von wenigstens zwei Drehgeschwindigkeiten um zueinander senkrecht stehende Achsen zu verringern.

Diese Aufgabe wird durch die im Anspruch 1 angegebenen Merkmale gelöst.

Für das Ausgangssignal $\Omega$ des Kreisels ergibt sich folgender Ausdruck:

$$\Omega = [(\Omega_I + \omega_{0I}) \cos \varphi + (\Omega_{II} + \omega_{0II}) . \sin \varphi] \cos \delta \cos \omega_0 t$$
$$+ [-(\Omega_I + \omega_{0I}) . \sin \varphi \cos v + (\Omega_{II} + \omega_{0II}) . \cos \varphi \cos v$$
$$+ (\omega_{III} + \omega_{0III}) . \sin v] . \cos \delta \sin \omega_0 t \quad (1)$$
$$+ [(\Omega_I + \omega_{0I}) \sin \varphi \sin v - (\Omega_{II} + \omega_{0II}) . \cos \varphi \sin v$$
$$+ (\Omega_{III} + \omega_{0III}) . \cos v] \sin \delta$$

Bei der erfindungsgemäßen Lösung wird ein einziger Kreisel verwendet, der sich der notwendigen Drehung nicht widersetzt; ein mechanischer Kreisel ist hier nicht einsetzbar. Die oben gegebene Lehre erlaubt, sowohl nur zwei als auch drei Drehgeschwindigkeiten $\Omega_I$, $\Omega_{II}$ und/oder $\Omega_{III}$ zu ermitteln. Zur Rechnungsvereinfachung wird die Hilfsdrehachse günstigerweise in eine der Achsen z.B. in die dritte Achse gelegt; dann treten Komponenten von $\omega_0$ um die anderen Achsen nicht auf. Da $\varphi$ und $v$ 0 sind vereinfacht sich der Ausdruck (I) oben zu:

$$\Omega = \Omega_I \cos \delta \cos \omega_0 t$$
$$+ \Omega_{II} \cos \delta \sin \omega_0 t \quad (2)$$
$$+ (\Omega_{III} + \omega_{0III}) \sin \delta$$

Man erkennt, daß man bei dieser Anordnung durch Ausmessen von $\Omega$ bei $\cos \omega_0 t_1 = 0$ und $\sin \omega_0 t_2 = 0$ und einem dritten Wert von $\omega t$ ($\omega_0 t_3$), bei dem der Sinus oder Kosinus von $\omega t_3$ 0 wird, alle drei Komponenten $\Omega_I$ bis $\Omega_{III}$ ermitteln kann. $\delta$ ist konstant. Macht man $\delta$ zu 0, so fällt das letzte Glied weg und man kann $\Omega_I$ und $\Omega_{II}$ durch Ausmessen von $\Omega$ bei zwei um 90° (oder einem ungeraden Vielfachen davon) verschiedenen Winkeln von $\alpha$ bestimmen.

Vorzugsweise wird die Drehgeschwindigkeit $\omega_0$ so groß gewählt, daß sie größer als die größtmöglichen zu bestimmenden Drehgeschwindigkeiten sind. Nur dann ist gewährleistet, daß die $\Omega$-Werte, die bei verschiedenen Winkeln von $\alpha$ bzw. gegebenenfalls $\delta$ nacheinander bestimmt werden, von der gleichen Drehgeschwindigkeit herrühren.

Man wird also $\omega_0$ je nach Anwendungsfall wählen. Bei einer Anwendung auf Schiffen treten praktisch keine Drehgeschwindigkeiten $\Omega$ größer als einige Grad/sec auf. Hier genügt für $\omega_0$ ein Wert von z.B. 10 U/sec. Bei Anwendungen in Landfahrzeugen wir $\omega_0$ größer z.B. zu 30 - 100 U/sec gewählt werden müssen.

Obwohl es an sich genügt den Kreisel nur in einem ausreichenden Winkelbereich mit $\omega_0$ hin und her zu schwenken, wird man im allgemeinen eine fortlaufende Drehung vorziehen. Ist $\omega_0$ über den gesamten Drehbereich konstant, so sind auch die sich daraus ergebenden Komponenten errechenbar und konstant. Gegebenenfalls muß $\omega_0$ auch durch Messung der Zeit für eine Umdrehung gemessen werden. Ist $\omega_0$ innerhalb der einzelnen Umdrehung nicht konstant, so muß man den Verlauf von $\omega_0$ innerhalb der Umdrehung ermitteln z.B. durch Messung der Zeiten bei Erreichen mehrerer Winkelmarken (z.B. alle 30°) und aus dem sich dabei ergebenden Verlauf die tatsächlichen Werte für die Komponenten von $\omega_0$ bei den entsprechenden Winkeln $\alpha_n$ und gegebenenfalls $\delta_n$ ermitteln.

In einer Weiterbildung der Erfindung wird vorgeschlagen, die Hilfsdrehachse derart im Raum anzuordnen, daß diese zu den Koordinaten x, y, z des Koordinatensystems gleiche Winkel bildet.

Betragen die Winkel jeweils 54,73°, dann wird aus der Hilfsdrehachse die Rotations- bzw. Mittelachse eines Kegels, dessen Mantellinie an drei Stellen mit den Koordinatenachsen identisch ist.

In einer bevorzugten Weiterbildung der Erfindung wird vorgeschlagen, die Eingangsachse des Kreisels parallel zur Mantellinie des Kegels auszurichten. In diesem Fall kann bei einer augenblicklichen Übereinstimmung der Eingangsachse mit einer der Koordinatenachsen direkt die Drehgeschwindigkeit um diese Koordinatenachse gemessen werden.

Anhand der Zeichnung wird ein Ausführungsbeispiel der Erfindung erläutert.

2

Es zeigen
Fig. 1 ein Ausführungsbeispiel, bei dem der Kreisel um die z-Achse mit $\omega_0$ gedreht wird,
Fig. 2 der dabei entstehende Verlauf von $\Omega$,
Fig. 3 ein Blockschaltbild zur Bestimmung der Komponenten von $\Omega$.
Fig. 4 ein Ausführungsbeispiel, bei dem der Kreisel auf einen Kegelmantel, der die x, y, z-Koordinaten tangiert, rotiert.

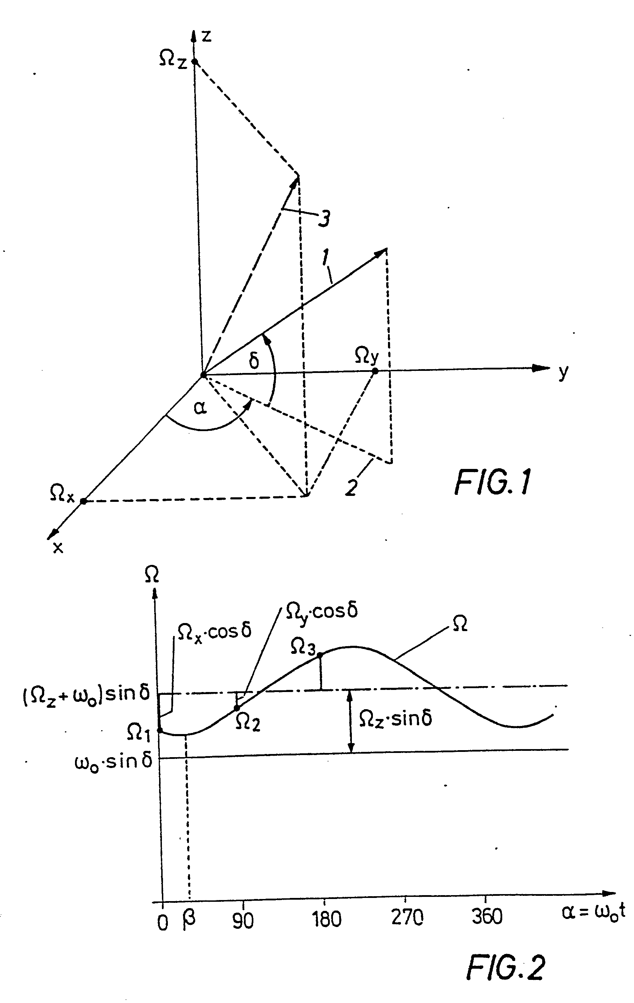

In Fig. 1 ist ein Laserkreisel im O-Punkt eines Koordinatensystems x, y, z aufgestellt. Dieser hat eine Eingangsachse 1, deren augenblickliche Lage durch die Winkel $\alpha = \omega_0 t$ zwischen der x-Achse und der Projektion 2 der Achse 1 auf die x-y-Ebene und den Winkel $\delta$ zwischen der Projektion 2 und der Achse 1 gegeben ist. Der Kreisel wird um die z-Achse mit der konstanten und bekannten Drehgeschwindigkeit $\omega_0$ gedreht. Damit beschreibt die Achse 1 einen Kegelmantel um die z-Achse. Eine zufällige und in ihren Komponenten $\Omega_x$, $\Omega_y$ und $\Omega_z$ zu bestimmende Drehgeschwindigkeit um eine beliebige Achse 3 ist der Drehung um die z-Achse mit $\omega_0$ noch überlagert.

Unter diesen Voraussetzungen gilt die oben angegebene Beziehung (2). Aufgetragen über dem sich durch die Drehung um die z-Achse ändernden Winkel $\alpha = \omega_0 t$ erhält man als Ausgangssignal $\Omega$ des Kreisels den in Fig. 2 dargestellten Verlauf, d.h., eine Schwingung um den sich aus dem letzten Glied von (2) ergebenden von $\Omega_z$ abhängigen, jedoch über $\alpha$ konstanten Wert $(\Omega_z + \omega_0) \sin \delta$. Durch Bestimmung der Werte $\Omega_1$ bei $\alpha_1 = 0°$, $\Omega_2$ bei $\alpha_2 = 90°$, sowie $\Omega_3$ bei $\alpha_3 = 180°$ erhält man folgendes Gleichungssystem:

$$\Omega_1 = \Omega_x \cos \delta + (\Omega_z + \omega_0 1) \sin \delta$$
$$\Omega_2 = \Omega_y \cos \delta + (\Omega_z + \omega_0) \sin \delta \quad (3)$$
$$\Omega_3 = -\Omega_x \cos \delta + (\Omega_z + \omega_0) \sin \delta$$

aus dessen Lösung sich die drei hierin Unbekannten $\Omega_x$, $\Omega_y$ und $\Omega_z$ ergeben zu:

$$\Omega_x = \frac{\Omega_1 - \Omega_3}{2 \cos \delta}$$
$$\Omega_y = \frac{2\Omega_2 - \Omega_1 - \Omega_3}{2 \cos \delta}$$
$$\delta_z = \frac{\Omega_1 + \Omega_3}{2 \sin} - \omega_0$$

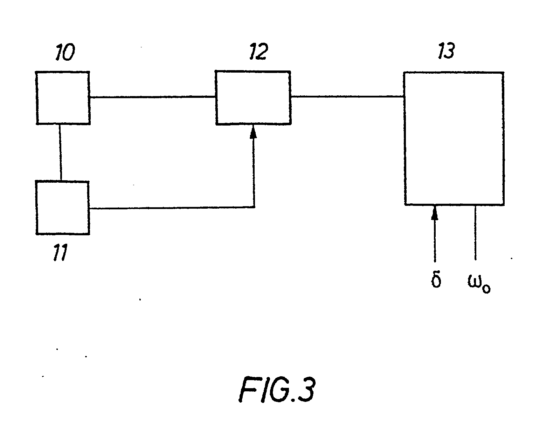

In Fig. 3 ist der Kreisel mit 10, ein die Drehung des Kreisels 10 überwachender und bei $\alpha_1$, $\alpha_2$ und $\alpha_3$ ein Triggersignal abgebener Abtaster mit 11, ein Tor mit 12 und ein Rechner mit 13 bzeichnet. Bei Erreichen der Winkelwerte $\alpha_1$ bis $\alpha_3$ gibt der Abtaster 11 Triggersignale an das Tor 12, sodaß die zu diesen Zeitpunkten anstehenden Ausgangssignale $\Omega_1$, $\Omega_2$ und $\Omega_3$ des Kreisels zum Rechner 13 gelangen, der die Gleichungen (4) unter Berücksichtigung der Konstanten $\omega_0$ und $\delta$ löst.

Aus (3) ergeben sich, wenn $\delta = 0$ ist, folgende Gleichungen:

$$\Omega_x = \Omega_1 \text{ bei } \alpha = 0° \text{ und}$$
$$\Omega_y = \Omega_2 \text{ bei } \alpha = 90° \text{ ist.}$$

Hier sind $\Omega_x$ und $\Omega_y$ also zwei Komponenten besonders einfach ermittelbar.

Das erfindungsgemäße Verfahren hat bei Verwendung eines Laserkreisels den besonderen Vorteil, daß ein Ausgangssignal $\Omega$ des Kreisels auftritt, (z.B. $\omega_{0III} \sin v$ (im Falle 2)) wenn noch keine zu messende Drehung mit den Komponenten $\Omega_I$, $\Omega_{II}$ und/oder $\Omega_{III}$ vorhanden ist. Diese Erscheinung bewirkt eine Verlegung des 0-Punkt des Laserkreisels: diese Erscheinung bringt also "nebenbei" eine Lock-in-Unterdrückung mit sich, d.h. die Vermeidung des Ausfall der Meßeigenschaft des Kreisels bei kleinen Drehraten. Hier ist $\delta$ so zu wählen, daß man bei gegebenem $\omega_0$ zu einer ausreichenden Verlegung des 0-Punkts in einen Ast der Arbeitskennlinie des Kreisels kommt.

Läßt man $\delta = 90°$ werden, so ergibt sich ein Laserkreisel, der nur noch Drehungen um eine Achse mißt, aber ebenfalls Lock-in-Unterdrückung aufweist (z.B. $\Omega = \Omega_{III} + \omega_{0III}$ bei (2). Auch dies ist eine wesentliche Erkenntnis, die sich bei Verwendung von Einzelkreiseln einsetzen läßt.

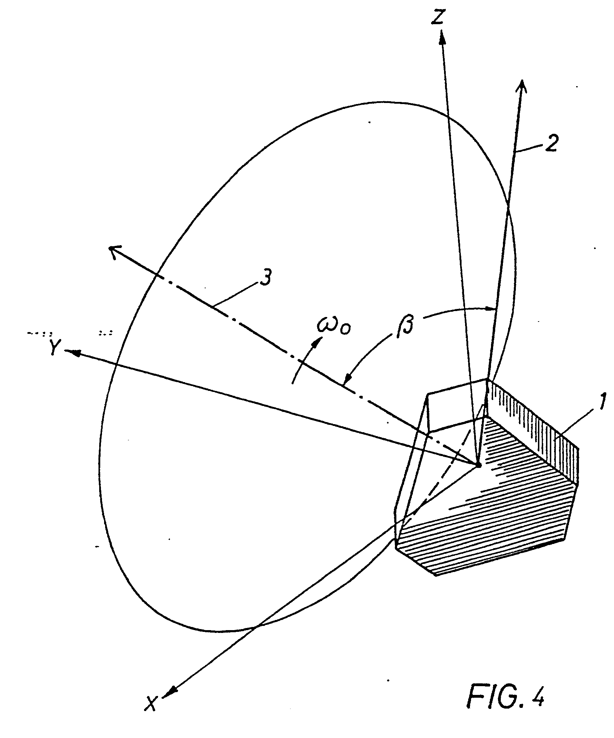

In Fig. 4 ist ein Laserkreisel 1 mit dessen Eingangsachse 2 dargestellt. Dieser Laserkreisel wird um die Drehachse 3 mit einer konstanten Geschwindigkeit $\omega_0$ gedreht. Die Eingangsachse 2 ist gegen die Drehachse um den Winkel $\beta = 54,73°$ geneigt. Dieser Wert ergibt sich aus der Beziehung $\cos^2\beta_1 + \cos^2\beta_2 + \cos^2\beta_3 = 1$ wobei $\beta_1 = \beta_2 = \beta_3$ definiert ist. Damit beschreibt die Achse 2 einen Kegelmantel und liegt in drei um 120° verdrehten Stellungen parallel zu den rechtwinklig aufeinander stehenden Koordinaten X, Y, Z eines beliebigen Koordinatensystems. Dieses Koordinatensystem ist bevorzugt mit dem Koordinatensystem identisch, in welchem der Vektor einer Drehgeschwindigkeit bestimmt werden soll. Damit entfällt eine Koordinatentransformation und die Drehgeschwindigkeitskomponente $\Omega$ des Vektors auf den Achsen X, Y, Z kann direkt aus den Messungen der Drehgeschwindigkeiten $\Omega_{I, II, III}$ um die Eingangsachse 2 des Kreisels in den drei mit den Koordinaten X, Y, Z identischen Stellungen nach der Beziehung

$$\Omega x = \Omega_I + \omega_0 \cos\beta$$
$$\Omega y = \Omega_{II} + \omega_0 \cos\beta$$
$$\Omega z = \Omega_{III} + \omega_0 \cos\beta$$

ermittelt werden, wobei die Komponente der Drehung $\omega_0$ um die Achse 3 berücksichtigt wird.

Das erfindungsgemäße Verfahren hat bei Verwendung eines Laserkreisels den besonderen Vorteil, daß ein Ausgangssignal $\Omega$ des Kreisels auftritt, wenn noch keine zu messende Drehung mit den Komponenten $\Omega_I$, $\Omega_{II}$ und/oder $\Omega_{III}$ vorhanden ist. Diese Erscheinung bewirkt eine Verlegung des 0-Punkts des Laserkreisels, bringt also "nebenbei" eine Lock-in-Unterdrückung mit sich, d.h. die Vermeidung des Ausfalls der Meßeigenschaft des Kreisels bei kleinen Drehraten. Hier ist $\omega_0$ so zu wählen, daß man zu einer ausreichenden Verlegung des 0-Punkts in einen Ast der Arbeitskennlinie des Kreisels kommt.

**Patentansprüche**

1. Verfahren zur Bestimmung der Drehgeschwindigkeiten $\Omega_I$, $\Omega_{II}$ und/oder $\Omega_{III}$ um wenigstens zwei Achsen I, II und/oder III eines Koordinatensystems, bei dem ein sich einer Drehung um eine beliebige Achse nicht widersetzender Kreisel mit einer bekannten Drehgeschwindigkeit $\omega_o$ mit den bekannten Komponenten $\omega_{oI}$, $\omega_{oII}$ und $\omega_{oIII}$ um eine Hilfsdrehachse gedreht wird und wobei die Eingangsachse (1) des Kreisels gegen die Hilfsdrehachse um einen Winkel 90 - $\delta$ geneigt ist, dadurch gekennzeichnet, daß nur ein einziger Kreisel verwendet wird, wobei die Ausrichtung dessen Hilfsdrehachse (Z) im Koordinatensystem durch die Winkel $\varphi$ und $\nu$ beschrieben ist, wobei $\varphi$ der Winkel zwischen der ersten Achse (x) und der Projektion dieser Hilfsdrehachse auf die durch die erste und die zweite Achse (x, y) aufgespannte Ebene und $\nu$ der Winkel zwischen der Hilfsdrehachse und dieser Projektion ist, daß bei Winkelwerten $\alpha = \omega_o t$, bei denen Komponenten des das Ausgangssignal $\Omega$ des Kreisels darstellenden Ausdrucks $\Omega = f [(\Omega_n + \omega_{on} 2$ für $n = $ I bis III), $(\varphi)$, $(\nu)$, $(\delta)$, $(\sin \omega_o t)$ und $(\cos \omega_o t)]$ zu 0 werden, der Wert für $\Omega$ gemessen wird und daß aus den erhaltenen Gleichungen die Werte für $\Omega_I$, $\Omega_{II}$ und/oder $\Omega_{III}$ errechnet werden, wobei $\omega$ die Kreisfrequenz wird t die Zeit ist.

2. Verfahren nach Anspruch 1, dadurch gekennzeichnet, daß das Koordinatensystem rechtwinklig ist.

3. Verfahren nach Anspruch 1 oder 2, dadurch gekennzeichnet, daß der Kreisel ein Laserkreisel ist.

4. Verfahren nach Anspruch 1, dadurch gekennzeichnet, daß die Hilfsdrehachse in eine der Achsen I, II oder III gelegt wird.

5. Verfahren nach Anspruch 4, dadurch gekennzeichnet, daß der Winkel $\delta$ zu 0 gewählt wird.

6. Verfahren nach einem der Ansprüche 1 bis 5, dadurch gekennzeichnet, daß die Drehgeschwindigkeit $\omega_o$ größer als die höchste vorkommende Winkelgeschwindigkeit $\Omega$ ist.

7. Verfahren nach einem der Ansprüche 1 bis 6, dadurch gekennzeichnet, daß die Drehgeschwindigkeit $\omega_o$ konstant gehalten wird.

8. Verfahren nach einem der Ansprüche 1 bis 7, dadurch gekennzeichnet, daß die Drehgeschwindigkeit jeweils gemessen wird.

9. Verfahren nach Anspruch 8, dadurch gekennzeichnet, daß der Verlauf der Drehgeschwindigkeit über den Drehwinkelbereich bestimmt wird und zur exakten Bestimmung von $\omega_o$ bei den Winkeln $\alpha_n$, bei denen $\Omega_n$ bestimmt wird, genutzt wird.

10. Verfahren nach Anspruch 1, dadurch gekennzeichnet, daß die Hilfsdrehachse derart ausgerichtet ist, daß die zwischen Hilfsdrehachse und Koordinatenachse des Koordinatensystems gebildeten Winkel $\beta_1$, $\beta_2$, $\beta_3$ gleich groß sind.

11. Verfahren nach Anspruch 10, dadurch gekennzeichnet, daß die Winkel $\beta_{1-3} = 54{,}73°$ betragen und die Eingangsachse des Kreisel ebenfalls zur Hilfsdrehachse um 54,73° geneigt ist, so daß bei Rotation des Kreisels um die Hilfsdrehachse die Eingangsachse in drei augenblicklichen Stellungen parallel zu den Koordinatenachsen x, y, z liegt.

12. Verfahren nach Anspruch 11, dadurch gekennzeichnet, daß das Ausgangssignal $\Omega$ des Kreisels in den drei Stellungen I, II, III nach den Beziehungen

$$\Omega_I = \Omega_x + \omega_o \cos\beta_1$$
$$\Omega_{II} = \Omega_y + \omega_o \cos\beta_2$$
$$\Omega_{III} = \Omega_z + \omega_o \cos\beta_3$$

gebildet wird, wobei mit $\Omega_{x,y,z}$ die zu ermittelnden Drehgeschwindigkeiten um die Achsen x, y, z bezeichnet sind.

**Claims**

1. A method of determining rotation speeds $\Omega_I$, $\Omega_{II}$ and/or $\Omega_{III}$ about at least two axes, I, II and/or III of a co-ordinate system, wherein a gyroscope which does not resist rotation about any axis is rotated about an auxiliary axis of rotation at a known speed of rotation $\omega_o$ with the known components $\omega_{oI}$, $\omega_{oII}$ and $\omega_{oIII}$ and wherein the input axis (1) of the gyroscope is inclined at an angle of 90 - $\delta$ in relation to the auxiliary axis of rotation, characterised in that only a single gyroscope is used, and the alignment of its auxiliary axis of rotation (Z) in the co-ordinate system is described by the angles Ø and $\theta$, Ø being the angle between the first axis (x) and the projection of this auxiliary axis of rotation on the plane extending through the first and the second axes (x, y) and $\theta$ being the angle between the auxiliary axis of rotation and this projection, that the value for $\Omega$ is measured at angular values $\alpha = w_o t$, at which components of the expression representing the output signal $\Omega$ of the gyroscope $\Omega = f [ (\Omega_n + \omega_{on}$ for $n = $ I to III), (Ø), ($\theta$), ($\delta$), ($\sin \omega_o t$) and ($\cos \omega_o t$) ] become 0, and that the values for $\Omega_I$, $\Omega_{II}$ and/or $\Omega_{III}$ are calculated from the equations obtained, $\omega$ being the angular frequency and t the time.

2. A method as claimed in Claim 1, characterised in that the co-ordinate system is right-angled.

3. A method as claimed in Claim 1 or 2, characterised in that the gyroscope is a laser gyro.

4. A method as claimed in Claim 1, characterised in that the auxiliary axis of rotation is laid in one of the axes I, II or III.

5. A method as claimed in Claim 4, characterised in that the angle $\delta$ is selected as 0.

6. A method as claimed in one of the Claims 1 to 5, characterised in that the speed of rotation $\omega_o$ is greater

4

**0 111 715**

than the maximum angular velocity occurring.

7. A method as claimed in one of the Claims 1 to 6, characterised in that the speed of rotation $\omega_0$ is kept constant.

8. A method as claimed in one of the Claims 1 to 7, characterised in that the speed of rotation is measured each time.

9. A method as claimed in Claim 8, characterised in that the course of the speed of rotation is determined over the angle-of-rotation range and is used for the precise determination of $\omega_0$ at the angle $\alpha_n$ at which $\Omega_n$ is determined.

10. A method as claimed in Claim 1, characterised in that the auxiliary axis of rotation is aligned in such a manner that the angle $\beta_1$, $\beta_2$, $\beta_3$, formed between auxiliary axis of rotation and co-ordinate axis of the co-ordinate system, are equal in size.

11. A method as claimed in Claim 10, characterised in that the angles $\beta_{1-3} = 54.73°$ and the input axis of the gyroscope is likewise inclined at $54.73°$ in relation to the auxiliary axis of rotation so that on rotation of the gyroscope about the auxiliary axis of rotation, the input axis lies parallel to the coordinate axes x, y, z in three instantaneous positions.

12. A method as claimed in Claim 11, characterised in that the output signal $\Omega$ of the gyroscope in the three positions I, II, III is formed in accordance with the equations

$$\Omega_I = \Omega_x + \omega_0 \cos \beta_1$$
$$\Omega_{II} = \Omega_y + \omega_0 \cos \beta_2$$
$$\Omega_{III} = \Omega_z + \omega_0 \cos \beta_3$$

the speeds of rotation to be determined, about the axes x, y, z, being designated by $\Omega_{x, y, z}$.

## Revendications

Procédé de détermination des vitesses de rotation $\Omega_I$, $\Omega_{II}$ et/ou $\Omega_{III}$ autour d'au moins deux axes I, II et/ou III d'un système de coordonnées, dans lequel un gyroscope ne s'opposant pas à une rotation autour d'un axe quelconque est entraîné en rotation à une vitesse angulaire connue $\omega_0$, ayant les composantes connues $\omega_{0I}$, $\omega_{0II}$ et $\omega_{III}$, autour d'un axe de rotation auxiliaire et l'axe d'entrée du gyroscope étant incliné d'un angle 90 - $\delta$ par rapport à l'axe de rotation auxiliaire, caractérisé en ce qu'un seul gyroscope est utilisé, auquel cas l'orientation de son axe de rotation auxiliaire (Z) dans le système de coordonnées est défini par les angles $\varphi$ et $v$, où $\varphi$ désigne l'angle formé entre le premier axe (x) et la projection de cet axe de rotation auxiliaire sur le plan passant par le premier et le second axe (x, y) tandis que $v$ définit l'angle formé entre l'axe de rotation auxiliaire et cette projection, en ce que, pour des valeurs angulaires $\alpha = \omega_0 t$, pour lesquelles des composantes de l'expression représentant le signal de sortie $\Omega$ du gyroscope $\Omega = f(\theta_n + \omega_{0n}$ pour n = I à III), $(\varphi)$, $(v)$, $(\delta)$, $(\sin \omega_0 t)$ et $(\cos \omega_0 t)$ deviennent nulles, la valeur de $\Omega$ est mesurée et en ce que, à partir des équations obtenues, les valeurs de $\Omega_I$, $\Omega_{II}$ et/ou $\Omega_{III}$ sont calculées, $\omega$ désignant la fréquence angulaire et t le temps.

2. Procédé selon la revendication 1, caractérisé en ce que le système de coordonnées est rectangulaire.

3. Procédé selon une des revendications 1 ou 2, caractérisé en ce que le gyroscope est un gyroscope à laser.

4. Procédé selon la revendication 1, caractérisé en ce que l'axe de rotation auxiliaire est placé sur un des axes I, II ou III.

5. Procédé selon la revendication 4, caractérisé en ce que l'angle $\delta$ est choisi égal à 0.

6. Procédé selon une des revendications 1 à 5, caractérisé en ce que la vitesse de rotation $\omega_0$ est supérieure à la plus grande vitesse angulaire $\Omega$ pouvant se produire.

7. Procédé selon une des revendications 1 à 6, caractérisé en ce que la vitesse de rotation $\omega_0$ est maintenue constante.

8. Procédé selon une des revendications 1 à 7, caractérisé en ce que la vitesse de rotation est mesurée à chaque fois.

9. Procédé selon la revendication 8, caractérisé en ce que la variation de la vitesse angulaire dans la plage angulaire de rotation est déterminée et elle est utilisée pour une détermination exacte de $\omega_0$ pour les angles $\alpha_n$, pour lesquels $\Omega_n$ est déterminé.

10. Procédé selon la revendication 1, caractérisé en ce que l'axe de rotation auxiliaire est orienté de telle sorte que des angles $\beta_1$, $\beta_2$, $\beta_3$ formés entre l'axe de rotation auxiliaire et les axes de coordonnées du système de coordonnées aient des valeurs égales.

11. Procédé selon la revendication 10, caractérisé en ce que les angles $\beta_{1\,3}$ s'élèvent à $54,73°$ et l'axe d'entrée du gyroscope est également incliné de $54,73°$ par rapport à l'axe de rotation auxiliaire de telle sorte que, lors d'une rotation du gyroscope autour de l'axe de rotation auxiliaire, l'axe d'entrée vienne se placer dans trois positions instantanées parallèles aux axes de coordonnées x, y, z.

12. Procédé selon la revendication 11, caractérisé en ce que le signal de sortie $\Omega$ du gyroscope est produit dans les trois positions I, II, III conformément aux relations:

$$\Omega_I = \Omega_x + \omega_0 \cos \beta_1$$
$$\Omega_{II} = \Omega_y + \omega_0 \cos \beta_2$$
$$\Omega_{III} = \Omega_z + \omega_0 \cos \beta_3$$

où $\Omega_{x,y,z}$ désignent les vitesses de rotation autour des axes x, y, z à déterminer.

5

*FIG.1*

*FIG.2*

10        12        13

11        δ   ω₀

FIG.3

FIG. 4